(19) **Europäisches Patentamt / European Patent Office / Office européen des brevets**

(11) **EP 4 583 074 A1**

(12) **EUROPEAN PATENT APPLICATION**
published in accordance with Art. 153(4) EPC

(43) Date of publication:
09.07.2025 Bulletin 2025/28

(21) Application number: 22956998.3

(22) Date of filing: 02.09.2022

(51) International Patent Classification (IPC):
$G08G\ 1/09^{(2006.01)}$     $B60W\ 30/08^{(2012.01)}$
$B60W\ 30/095^{(2012.01)}$     $G08G\ 1/16^{(2006.01)}$

(52) Cooperative Patent Classification (CPC):
G06V 20/58; G06V 10/87; G06V 20/56;
G08G 1/0112; G08G 1/0116; G08G 1/0129;
G08G 1/0145; G08G 1/164

(86) International application number:
PCT/CN2022/116830

(87) International publication number:
WO 2024/045178 (07.03.2024 Gazette 2024/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Shenzhen Yinwang Intelligent
Technologies Co., Ltd.
Shenzhen, Guangdong 518129 (CN)

(72) Inventor: HU, Weichen
Shenzhen, Guangdong 518129 (CN)

(74) Representative: Maiwald GmbH
Engineering
Elisenhof
Elisenstrasse 3
80335 München (DE)

(54) **SENSING METHOD, APPARATUS, AND SYSTEM**

(57) This application provides a sensing method, apparatus, and system. The sensing apparatus obtains a first feature model corresponding to a first region through which an intelligent driving device needs to pass, where the first feature model is one of a plurality of feature models, and different feature models in the plurality of feature models are used to sense feature obstacles in different regions. The sensing apparatus senses a first obstacle set in the first region based on the first feature model. The method in this application can be applied to an autonomous vehicle like an intelligent vehicle or an electric vehicle, to reduce missed detection and false detection that are caused by an insufficient sensing capability of a sensing algorithm, so as to improve driving safety.

**500**

S501: Obtain a first feature model corresponding to a first region through which an intelligent driving device needs to pass, where the first feature model is one of a plurality of feature models, and different feature models in the plurality of feature models are used to sense feature obstacles in different regions

S502: Sense a first obstacle set in the first region based on the first feature model

FIG. 5

## Description

### TECHNICAL FIELD

This application relates to the field of autonomous driving, and more specifically, to a sensing method, apparatus, and system.

### BACKGROUND

Autonomous driving technologies gradually become a research hot topic. However, road conditions in different regions are different to some extent (for example, wild animals seldom appear on a road in a city, but may appear on a road in a mountainous region), and sensing capabilities of a same sensing algorithm in different regions may be greatly different. As a result, when a vehicle travels on a strange road, a sensing deviation occurs in a sensing system (for example, false detection or missed detection occurs during obstacle identification), which reduces safety of an autonomous driving system.

Therefore, how to reduce sensing deviations of the autonomous driving system on roads in different regions to improve sensing precision of the autonomous driving system in different regions and improve vehicle travel safety becomes an urgent problem to be resolved.

### SUMMARY

This application provides a sensing method, apparatus, and system, to reduce sensing deviations of an intelligent driving device on roads in different regions, improve sensing precision of the intelligent driving device for feature obstacles in different regions, so as to improve driving safety.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in this application. For another example, the intelligent driving device may be a transportation means like an airplane or a ship.

According to a first aspect, a sensing method is provided. The method may be performed by an intelligent driving device, or may be performed by a chip or a circuit used in an intelligent driving device; or when an intelligent driving device is a vehicle, the method may be performed by a mobile data center (mobile data center, MDC) of the vehicle, or may be performed by a control component in an electronic control unit (electronic control unit, ECU) of the vehicle, for example, in an on board unit (on board unit, OBU) or a telematics box (telematics box, T-Box). This is not limited in this application.

The method includes: obtaining a first feature model corresponding to a first region through which an intelligent driving device needs to pass, where the first feature model is one of a plurality of feature models, and different feature models in the plurality of feature models are used to sense feature obstacles in different regions; and sensing a first obstacle set in the first region based on the first feature model.

In some possible implementations, the first feature model is obtained when it is determined that the intelligent driving device is about to reach or has reached the first region.

In the foregoing technical solution, when the intelligent driving device is about to travel or has traveled in the first region, a feature obstacle in the first region can be identified by obtaining the first feature model corresponding to the first region. This helps improve sensing precision of the intelligent driving device in the region. Further, when traveling to different regions, the intelligent driving device may sense, by obtaining feature models corresponding to the regions, different feature obstacles corresponding to the different regions. Therefore, missed detection and false detection that are caused by an insufficient sensing capability of a sensing algorithm can be reduced, to improve driving safety.

With reference to the first aspect, in some implementations of the first aspect, the method further includes: sensing a second obstacle set in the first region based on a second feature model of the intelligent driving device; controlling, within a first preset range of the intelligent driving device, traveling of the intelligent driving device based on a union set of the first obstacle set and the second obstacle set; controlling, outside the first preset range and within a second preset range of the intelligent driving device, traveling of the intelligent driving device based on the first obstacle set; and controlling, outside the second preset range, traveling of the intelligent driving device based on a third obstacle set, where the third obstacle set includes an obstacle included in both the first obstacle set and the second obstacle set.

For example, the first feature model is obtained through training based on data of the first region, and the data of the first region includes information about a feature obstacle in the first region. Therefore, the feature obstacle in the region can be sensed based on the first feature model. The second feature model is a feature model of the intelligent driving device. The second feature model may be obtained through training based on data of a region in which the intelligent driving device frequently travels, or may be obtained through training based on sensor data obtained in a historical travel process of one or more intelligent driving devices. It should be understood that the region in which the intelligent driving device frequently travels may not include the first region. Further, an obstacle that exists on a road on which the intelligent driving device frequently travels may be sensed based on the second feature model; or an obstacle that exists on a plurality of roads, for example, a small car, a bicycle, or a motorcycle, may be sensed based on the second feature model. It should be understood that the historical travel of the one or more intelligent driving devices may include a journey that passes through the first region. However, due to an insufficient data amount, the feature obstacle in the first region cannot be accurately sensed based on the second feature model.

Therefore, sensing the obstacle in the first region based on the first feature model can improve accuracy of sensing the feature obstacle in the first region.

For example, the first preset range may be a range of 30 meters away from the intelligent driving device, and the second preset range may be a range of 60 meters away from the intelligent driving device, or the first preset range and the second preset range may be other values.

The controlling, within a first preset range of the intelligent driving device, traveling of the intelligent driving device based on a union set of the first obstacle set and the second obstacle set may be: controlling, based on an obstacle that is within the first preset range and that is in the union set of the first obstacle set and the second obstacle set, the intelligent driving device to travel. The controlling, outside the first preset range and within a second preset range of the intelligent driving device, traveling of the intelligent driving device based on the first obstacle set may be: controlling, based on an obstacle that is outside the first preset range and within the second preset range and that is in the first obstacle set, the intelligent driving device to travel. The controlling, outside the second preset range of the intelligent driving device, traveling of the intelligent driving device based on a third obstacle set may be: controlling, based on an obstacle outside the second preset range in the third obstacle set, the intelligent driving device to travel.

In the foregoing technical solution, for different preset ranges of the intelligent driving device, different obstacle sets are used to plan a travel path of the intelligent driving device. For example, within a range that is relatively close to the intelligent driving device, path planning is performed based on obstacles (may have a large quantity) in a union of the first obstacle set and the second obstacle set, and in a region that is relatively far away from the intelligent driving device, path planning is performed only based on obstacles (may have a small quantity) included in both the first obstacle set and the second obstacle set. In a path planning process, the intelligent driving device may be in a driving state. The foregoing method can ensure that in the path planning process, from far to near, there is a transition process in which a quantity of considered obstacles changes from zero to a small quantity and to a large quantity. Therefore, smoothness of a planning algorithm can be improved, unnecessary computing power wastes can be reduced, and energy consumption can be reduced.

With reference to the first aspect, in some implementations of the first aspect, the method further includes: determining a first sensing level based on the first obstacle set and the second obstacle set, where the first sensing level indicates sensing precision of the intelligent driving device in a case in which the intelligent driving device passes through the first region.

In the foregoing technical solution, the sensing level of the intelligent driving device in the first region is evaluated, so that when the intelligent driving device travels to the first region next time, the intelligent driving device may determine, based on the first sensing level, a sensing algorithm required for obstacle identification.

With reference to the first aspect, in some implementations of the first aspect, the method further includes: sending identification information of the first region and information about the first sensing level to a server, so that the server updates a sensing level corresponding to the first region.

In the foregoing technical solution, the information about the first sensing level is sent to the server, so that the server can update the sensing level corresponding to the first region, and the server can indicate more accurate sensing precision for the intelligent driving device that needs to pass through the first region. This reduces safety accidents caused by misjudgment of the sensing level of the first region, and helps improve driving safety.

With reference to the first aspect, in some implementations of the first aspect, the obtaining a first feature model corresponding to a first region in which an intelligent driving device is located includes: receiving information that is about the first feature model and that is sent by a road side unit in the first region, where the road side unit is located at an entrance of the first region.

In the foregoing technical solution, the intelligent driving device obtains the information about the first feature model from the road side unit, and the intelligent driving device does not need to store the first feature model. This helps save storage space of the intelligent driving device. In addition, the road side unit is deployed at the entrance of the first region. There is no need to dispose a plurality of road side units so that a detection range of the road side unit covers an entire road, and there is no need to deploy a sensing-type road side unit so that costs required for deploying the road side unit can be greatly reduced.

With reference to the first aspect, in some implementations of the first aspect, before the receiving information that is about the first feature model and that is sent by a road side unit in the first region, the method further includes: sending sensor information of the intelligent driving device to the road side unit; and the receiving information that is about the first feature model and that is sent by a road side unit in the first region includes: receiving the information that is about the first feature model and that is sent by the road side unit based on the sensor information.

Optionally, the sensor information may include information about a sensor type; or the sensor information may be other information that can indicate a sensor type. The intelligent driving device is used as an example. The sensor information may include a vehicle identification number (vehicle identification number, VIN). In some possible implementations, the road side unit may determine, based on the VIN number, a type of a sensor used by a vehicle.

In the foregoing technical solution, the information that is about the first feature model and that is sent by the road side unit based on the sensor information is received, so that the first feature model is determined based on the sensor information of the intelligent driving device, and compatibility between the first feature model and the sensor data of the intelligent driving device can be ensured.

With reference to the first aspect, in some implementations of the first aspect, the sending sensor information of the intelligent driving device to the road side unit includes: receiving information that is about a third sensing level and that is sent by the road side unit, where the third sensing level indicates recommended sensing precision corresponding to the first region; and sending the sensor information of the intelligent driving device to the road side unit when sensing precision of a second sensing level is less than the sensing precision of the third sensing level, where the second sensing level indicates current sensing precision corresponding to the first region or default sensing precision of the intelligent driving device.

In some possible implementations, the second sensing level indicates the current sensing precision corresponding to the first region, and when the current sensing precision corresponding to the first region is greater than or equal to the recommended sensing precision corresponding to the first region, the intelligent driving device determines the feature model based on the sensing precision indicated by the second sensing level, to perform obstacle identification.

In the foregoing technical solution, when the recommended sensing precision is greater than the default sensing precision of the intelligent driving device or the current sensing precision corresponding to the first region, the first feature model can be obtained from the road side unit, to perform obstacle sensing. This helps reduce false detection and missed detection caused by insufficient sensing precision, and helps improve driving safety.

With reference to the first aspect, in some implementations of the first aspect, when the second sensing level indicates the current sensing precision corresponding to the first region, the method further includes: sending the identification information of the first region to the server; and receiving information that is about the second sensing level and that is sent by the server based on the identification information.

In some possible implementations, the second sensing level sent by the server is determined based on sensing levels reported by a plurality of intelligent driving devices traveling in the first region. For example, in the sensing levels reported by the plurality of intelligent driving devices, the sensing level that is most frequently used is determined as the second sensing level.

In the foregoing technical solution, sensing precision can be determined based on the information about the sensing level obtained from the server, to determine whether the first feature model needs to be obtained from the road side unit. This helps reduce safety accidents caused by misjudgment of the sensing level, and helps improve driving safety.

According to a second aspect, a sensing method is provided. The method may be performed by a road side unit (road side unit, RSU), or may be performed by a chip or a circuit used in a road side unit. In this application, the road side unit may communicate with the intelligent driving device, and the road side unit may include a high-performance computing unit required for data processing, and the like. In some possible implementations, the road side unit may further include a sensing device like a camera, a millimeter-wave radar, or a lidar.

The method includes: receiving sensor information that is of an intelligent driving device and that is sent by the intelligent driving device that needs to pass through a first region; determining a first feature model based on the sensor information, where the first feature model is one of a plurality of feature models, different feature models in the plurality of feature models are used to sense feature obstacles in different regions, and the first feature model corresponds to the first region; and sending information about the first feature model to the intelligent driving device, so that the intelligent driving device senses a first obstacle set in the first region based on the first feature model.

In the foregoing technical solution, the first feature model corresponding to the first region is sent to the intelligent driving device that needs to pass through the first region, to help the intelligent driving device identify the feature obstacle in the first region based on the first feature model. This helps improve sensing precision of the intelligent driving device in the region, and can reduce missed detection and false detection that are caused by an insufficient sensing capability of a sensing algorithm, thereby improving driving safety.

With reference to the second aspect, in some implementations of the second aspect, before the receiving sensor information that is of an intelligent driving device and that is sent by the intelligent driving device that needs to pass through a first region, the method further includes: sending information about a sensing level to the intelligent driving device, where the sensing level indicates recommended sensing precision corresponding to the first region.

In the foregoing technical solution, the road side unit may directly send the information about a third sensing level to the intelligent driving device without a request of the intelligent driving device. This helps reduce signaling.

With reference to the second aspect, in some implementations of the second aspect, the method further includes: sending identification information of the first region to the intelligent driving device.

In the foregoing technical solution, the identification information of the first region is sent to the intelligent driving device, so that the intelligent driving device determines a region in which the intelligent driving device is located, and determines whether the first feature model needs to be obtained. This helps improve driving safety.

According to a third aspect, a sensing apparatus is provided. The apparatus includes an obtaining unit and a first processing unit. The obtaining unit is configured to: obtain a first feature model corresponding to a first region through which an intelligent driving device needs to pass, where the first feature model is one of a plurality of feature models, and different feature models in the plurality of feature models are used to sense feature obstacles in different regions, and the first processing unit is configured to: sense a first obstacle set in the first region based on the first feature model.

With reference to the third aspect, in some implementations of the third aspect, the apparatus further includes a second processing unit and a third processing unit. The second processing unit is configured to: sense a second obstacle set in the first region based on a second feature model of the intelligent driving device; and the third processing unit is configured to: control, within a first preset range of the intelligent driving device, traveling of the intelligent driving device based on a union set of the first obstacle set and the second obstacle set; control, outside the first preset range and within a second preset range of the intelligent driving device, traveling of the intelligent driving device based on the first obstacle set; and control, outside the second preset range, traveling of the intelligent driving device based on a third obstacle set, where the third obstacle set includes an obstacle included in both the first obstacle set and the second obstacle set.

With reference to the third aspect, in some implementations of the third aspect, the apparatus further includes a fourth processing unit, and the fourth processing unit is configured to: determine a first sensing level based on the first obstacle set and the second obstacle set, where the first sensing level indicates sensing precision of the intelligent driving device in a case in which the intelligent driving device passes through the first region.

With reference to the third aspect, in some implementations of the third aspect, the apparatus further includes a first communication unit, where the first communication unit is configured to: send identification information of the first region and information about the first sensing level to a server, so that the server updates a sensing level corresponding to the first region.

With reference to the third aspect, in some implementations of the third aspect, the apparatus further includes a second communication unit, and the obtaining unit is configured to: obtain information that is about the first feature model and that is sent by a road side unit in the first region and received by the second communication unit, where the road side unit is located at an entrance of the first region.

With reference to the third aspect, in some implementations of the third aspect, the second communication unit is further configured to: send sensor information of the intelligent driving device to the road side unit; and receive the information that is about the first feature model and that is sent by the road side unit based on the sensor information.

With reference to the third aspect, in some implementations of the third aspect, the second communication unit is further configured to: receive information that is about a third sensing level and that is sent by the road side unit, where the third sensing level indicates recommended sensing precision corresponding to the first region; and send the sensor information of the intelligent driving device to the road side unit when sensing precision of the second sensing level is less than the sensing precision of the third sensing level, where the second sensing level indicates current sensing precision corresponding to the first region or default sensing precision of the intelligent driving device.

With reference to the third aspect, in some implementations of the third aspect, when the second sensing level indicates the current sensing precision corresponding to the first region, the first communication unit is further configured to: send the identification information of the first region to the server; and receive information that is about the second sensing level and that is sent by the server based on the identification information.

According to a fourth aspect, a sensing apparatus is provided. The apparatus includes a first communication unit and a determining unit. The first communication unit is configured to: receive sensor information that is of an intelligent driving device and that is sent by the intelligent driving device that needs to pass through a first region; the determining unit is configured to: determine a first feature model based on the sensor information, where the first feature model is one of a plurality of feature models, different feature models in the plurality of feature models are used to sense feature obstacles in different regions, and the first feature model corresponds to the first region; and the first communication unit is further configured to: send information about the first feature model to the intelligent driving device, so that the intelligent driving device senses a first obstacle set in the first region based on the first feature model.

With reference to the fourth aspect, in some implementations of the fourth aspect, the apparatus further includes a second communication unit, and the second communication unit is configured to: before the first communication unit receives the sensor information that is of the intelligent driving device and that is sent by the intelligent driving device, send information about a sensing level to the intelligent driving device, where the sensing level indicates recommended sensing precision corresponding to the first region.

With reference to the fourth aspect, in some implementations of the fourth aspect, the apparatus further includes a third communication unit, and the third communication unit is further configured to: send identification information of the first region to the intelligent driving device.

According to a fifth aspect, a sensing apparatus is provided. The apparatus includes a processing unit and a storage unit. The storage unit is configured to store instructions, and the processing unit executes the instructions stored in the storage unit, so that the apparatus performs the method in any possible implementation of the first aspect or the second aspect.

Optionally, the processing unit may include at least one processor, and the storage unit may be a memory. The memory may be a storage unit (for example, a register or a cache) in a chip, or may be a storage unit (for example, a read-only memory or a random access memory) located outside a chip in an intelligent driving device.

According to a sixth aspect, an intelligent driving device is provided. The intelligent driving device includes the apparatus in any implementation of the third aspect.

With reference to the sixth aspect, in some implementations of the sixth aspect, the intelligent driving device is a vehicle.

According to a seventh aspect, a road side unit is provided. The road side unit includes the apparatus in any implementation of the fourth aspect.

According to an eighth aspect, a sensing system is provided. The system includes the apparatus according to any one of the third aspect and the apparatus according to any one of the fourth aspect, or includes the intelligent driving device according to any one of the sixth aspect and the road side unit according to any one of the seventh aspect.

With reference to the eighth aspect, in some implementations of the eighth aspect, the sensing system may further include a server, where the server is configured to: receive identification information that is of a first region and that is sent by an intelligent driving device that needs to pass through the first region; and send information about a second sensing level to the intelligent driving device based on the identification information, where the second sensing level indicates current sensing precision corresponding to the first region.

According to a ninth aspect, a computer program product is provided. The computer program product includes computer program code. When the computer program code is run on a computer, the computer is enabled to perform the method in any possible implementation of the first aspect or the second aspect.

It should be noted that the computer program code may be completely or partially stored in a first storage medium. The first storage medium may be encapsulated with a processor, or encapsulated separately from a processor.

According to a tenth aspect, a computer-readable medium is provided. The computer-readable medium stores instructions. When the instructions are executed by a processor, the processor is enabled to implement the method in any possible implementation of the first aspect or the second aspect.

According to an eleventh aspect, a chip is provided, where the chip includes a circuit, and the circuit is configured to perform the method in any possible implementation of the first aspect or the second aspect.

## BRIEF DESCRIPTION OF DRAWINGS

FIG. 1 is a diagram of a scenario in which a vehicle senses an obstacle;
FIG. 2 is a functional block diagram of an intelligent driving device according to an embodiment of this application;
FIG. 3 is a block diagram of an architecture of a sensing system according to an embodiment of this application;
FIG. 4 is a diagram of an application scenario of a sensing method according to an embodiment of this application;
FIG. 5 is a schematic flowchart of a sensing method according to an embodiment of this application;
FIG. 6 is a schematic flowchart of a sensing method according to an embodiment of this application;
FIG. 7 is a schematic flowchart of a sensing method according to an embodiment of this application;
FIG. 8 is a diagram of an obstacle set according to an embodiment of this application;
FIG. 9 is a diagram of a scenario in which an obstacle is determined based on a preset range according to an embodiment of this application;
FIG. 10 is a block diagram of a sensing apparatus according to an embodiment of this application;
FIG. 11 is a block diagram of a sensing apparatus according to an embodiment of this application; and
FIG. 12 is a block diagram of a sensing apparatus according to an embodiment of this application.

## DESCRIPTION OF EMBODIMENTS

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

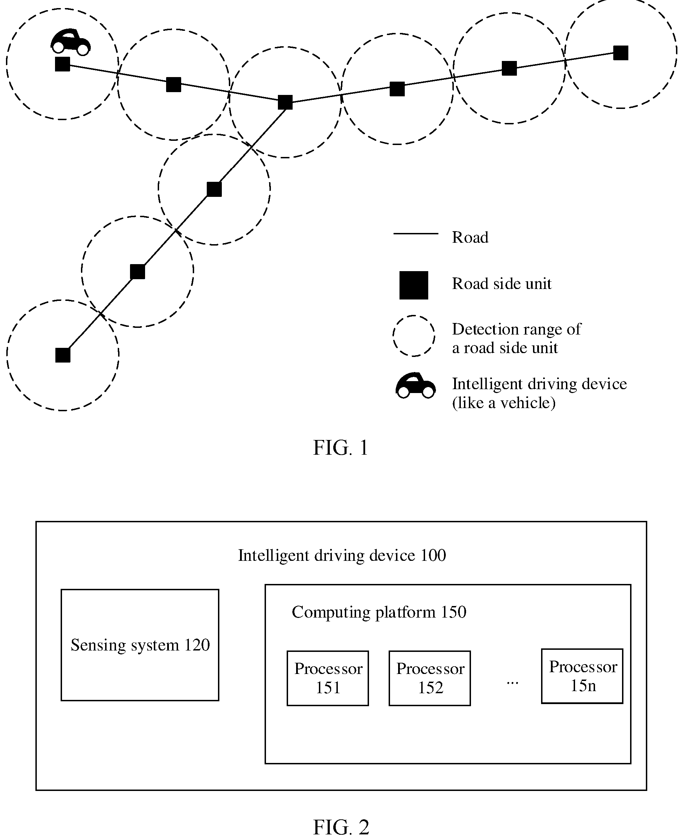

As autonomous driving technologies develop, to ensure driving safety, developers pay more attention to sensing precision of a vehicle on an obstacle around the vehicle. In a current technical background, in a travel process of a vehicle, sensing data (or referred to as sensor data) obtained by a sensing system of the vehicle is processed to obtain information about an obstacle around the vehicle, and a travel path of the vehicle is planned based on the information about the obstacle. To improve sensing precision of the vehicle on the road information, the information about the obstacle around the vehicle may be determined with reference to sensing data of a road side unit and sensing data of the vehicle. As shown in FIG. 1, in a process in which a vehicle travels on a road, the vehicle may exchange information with a road side unit (or referred to as a roadside infrastructure) through communication (vehicle to infrastructure, V2I) between the roadside infrastructure and the vehicle. The road side unit may be disposed on a roadside, and may obtain a sensing result within a detection range (as shown in FIG. 1) of a sensing device. Because a detection range of the road side unit is relatively limited, to make the detection range of the road side unit cover an entire road, a plurality of road side units need to be disposed on the road.

For the foregoing technical solution, on one hand, improvement of sensing precision of an obstacle around a vehicle depends on sensing data from a plurality of road side units, therefore, costs of promoting and popularizing an automatic driving technology increase. On the other hand, a sensing algorithm of the vehicle is still used when the vehicle determines the obstacle information with reference to the sensing data of the road side unit and the sensing data of the vehicle, and the sensing algorithm is generally trained based on sensing data of a region in which the vehicle frequently travels. Consequently, when the vehicle travels on a strange road, a sensing deviation occurs in the sensing system. For example, when a vehicle that frequently travels on an urban road travels to a mountainous road, because a sensing algorithm has not been trained based on data of the mountainous road, false detection or missed detection, for example, false detection or missed detection of a wild animal, may occur in obstacle identification of the sensing algorithm. For the former case (namely, the false detection), a moving speed or a path of an obstacle (for example, a wild animal that is incorrectly detected) may be incorrectly predicted during subsequent vehicle path planning, and consequently, a planned travel path of the vehicle is unsafe. For example, the vehicle may collide with the obstacle. For the latter case (namely, the missed detection), impact of the obstacle on the vehicle may be completely ignored during vehicle path planning, and driving safety is seriously affected.

In view of this, embodiments of this application provide a sensing method, apparatus, and system. When an intelligent driving device (for example, a vehicle) travels to a region, a feature model (a first feature model below) corresponding to the region may be obtained. Because the feature model is obtained through training based on data of the region, a feature obstacle in the region can be sensed based on the feature model, and sensing deviations of the intelligent driving device on roads in different regions can be reduced. This improves sensing precision of the intelligent driving device in different regions, thereby improving driving safety. The following describes technical solutions of embodiments in this application with reference to accompanying drawings.

FIG. 2 is a functional block diagram of an intelligent driving device 100 according to an embodiment of this application. The intelligent driving device 100 may include a sensing system 120 and a computing platform 150. The sensing system 120 may include several types of sensors that sense information about an environment around the intelligent driving device 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), like a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

For example, the computing platform 150 may include at least one of an MDC, a vehicle domain controller (vehicle domain controller, VDC), and a chassis domain controller (chassis domain controller, CDC), or may further include another computing platform, for example, an in-car application server (in-car application server, ICAS) controller, a body domain controller (body domain controller, BDC), a special equipment system (special equipment system, SAS), a media graphics unit (media graphics unit, MGU), a body super core (body super core, BSC), or an ADAS super core (ADAS super core). This is not limited in this application. The ICAS may include at least one of the following: a vehicle control server ICAS 1, an intelligent driving server ICAS 2, an intelligent cockpit server ICAS 3, and an information entertainment server ICAS 4.

The intelligent driving device 100 may include an advanced driving assistance system (advanced driving assistant system, ADAS). The ADAS obtains information from around the intelligent driving device by using a plurality of sensors (including but not limited to: a lidar, a millimeter-wave radar, a camera apparatus, an ultrasonic sensor, a global positioning system, and an inertial measurement unit) in the sensing system 120, and analyzes and processes the obtained information, to implement functions such as obstacle sensing, target recognition, intelligent driving device positioning, path planning, and driver monitoring/reminder. In this way, safety, automation, and comfort of the intelligent driving device are improved.

Before the sensing method is described, an architecture of a system to which the sensing method provided in embodiments of this application is applicable is first described.

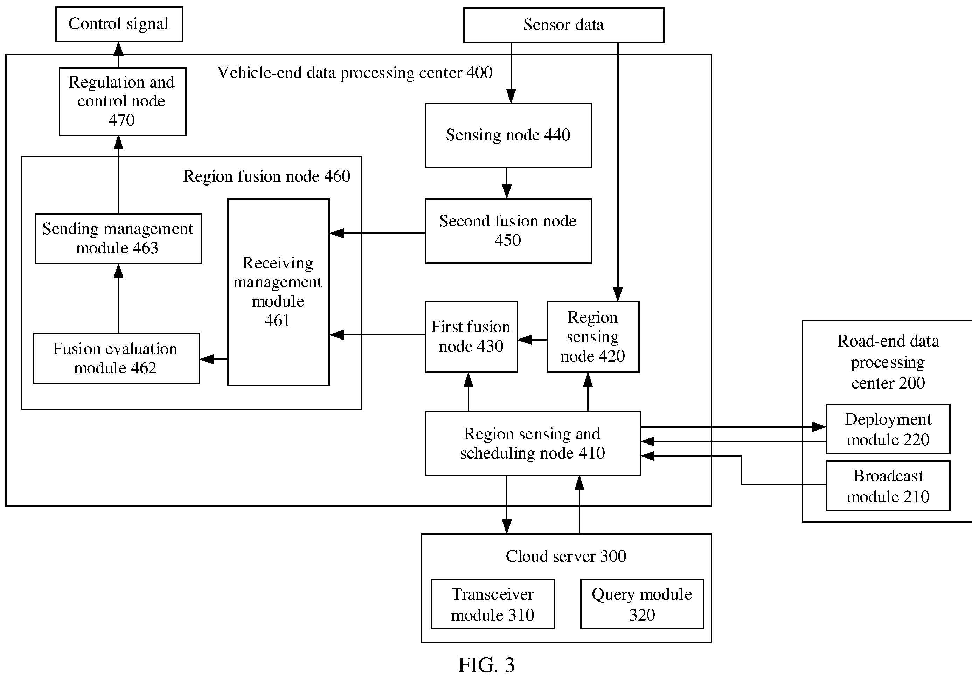

FIG. 3 is a block diagram of an architecture of a sensing system according to an embodiment of this application. The sensing system includes a road-end data processing center 200, a cloud server 300, and a vehicle-end data processing center 400. The road-end data processing center 200 may be a computing platform disposed in a road side unit, or may be a server configured to control a road side unit. The vehicle-end data processing center 400 may be the computing platform 150 disposed in the intelligent driving device 100 shown in FIG. 2, or may be a server configured to control the intelligent driving device 100.

Specifically, the road-end data processing center 200 includes a broadcast module 210 and a deployment module 220. The broadcast module 210 is configured to send, to an intelligent driving device within a detection range of a road side unit, identification information of a region (for example, a region identifier) for which the road side unit is responsible and information about recommended sensing precision (referred to as recommended sensing precision below) of the intelligent driving device in the region. The deployment module 220 is configured to: receive sensor information sent by the intelligent driving device, and send, to the intelligent driving device based on the sensor information, information about a feature model of the region for which the intelligent driving device is responsible, where the feature model is used to sense a feature obstacle in the region for which the road side unit is responsible. It should be noted that a "feature obstacle" in a specific region in embodiments of this application may be an obstacle that is specific to the region and that is different from that in another region, for example, a wild animal in a mountainous region, a person wearing clothing with a regional feature, or a vehicle specific to the region.

The cloud server 300 includes a transceiver module 310 and a query module 320. The transceiver module 310 may receive the identification information of a region sent by the intelligent driving device, and the query module 320 determines, based on the identification information of the region, sensing precision corresponding to the region. Further, the transceiver module 310 sends information about the sensing precision corresponding to the region to the intelligent driving device. Optionally, the sensing precision corresponding to the region is sensing precision that is determined by the cloud server 300 and that is most commonly used by the intelligent driving device in the region.

The vehicle-end data processing center 400 includes: a region sensing and scheduling node 410, a region sensing node 420, a first fusion node 430, a sensing node 440, a second fusion node 450, a region fusion node 460, and a regulation and control node 470. The region sensing and scheduling node 410 is configured to exchange information with the road-end data processing center 200 and the cloud server 300, including but not limited to: receiving the identification information of the region and the information about recommended sensing precision that are sent by the broadcast module 210; sending the sensor information of the intelligent driving device to the deployment module 220; receiving the information that is about the feature model and that is sent by the deployment module 220, and deploying the feature model on the region sensing node 420 and the first fusion node 430; sending the identification information of the region to the transceiver module 310; and receiving the information that is about the sensing precision corresponding to the region and that is sent by the transceiver module 310. The region sensing node 420 is configured to process, based on the information that is about the feature model and that is received from the road-end data processing center 200, sensor data from the sensing system of the intelligent driving device, to obtain information about an obstacle around the intelligent driving device. In some possible implementations, the region sensing node 420 includes one or more child nodes, and each child node is configured to determine information about an obstacle (for example, a location and a type of an obstacle) based on one type of sensor data. For example, the region sensing node 420 includes a child node 421, a child node 422, and a child node 423, where the child node 421 is configured to determine information about an obstacle based on lidar data, the child node 422 is configured to determine information about an obstacle based on camera apparatus data, and the child node 423 is configured to determine information about an obstacle based on GPS data. The first fusion node 430 is configured to perform fusion on information that is about obstacles and that is obtained through processing by the region sensing node 420, to obtain a first obstacle set. The fusion may be understood as: further determining types of the obstacles and locations of the obstacles around the intelligent driving device based on the information that is about obstacles and that is determined by the child nodes in the region sensing node 420. The sensing node 440 is configured to process, based on a feature model of the intelligent driving device, the sensor data from the sensing system of the intelligent driving device, to obtain information about obstacles around the intelligent driving device. In some possible implementations, the sensing node 440 may include one or more child nodes. The second fusion node 450 is configured to perform fusion on the information about obstacles obtained by the sensing node 440 through processing, to obtain a second obstacle set. The region fusion node 460 may include a receiving management module 461, a fusion evaluation module 462, and a sending management module 463. The receiving management module 461 is configured to: receive information about the obstacle sets from the first fusion node 430 and the second fusion node 450, and send the information to the fusion evaluation module 462. The fusion evaluation module 462 is configured to: determine a new obstacle set based on the information about the obstacle sets, and send the new obstacle set to the sending management module 463, and the sending management module 463 is configured to send information about the new obstacle set to the regulation and control node 470. The regulation and control node 470 plans a travel path of the intelligent driving device based on the new obstacle set, and generates a control signal, to control the intelligent driving device to travel.

It should be understood that the architecture of the system shown in FIG. 3 is merely an example for description. In a specific implementation process, the foregoing system may include more or fewer modules or nodes, and the foregoing modules or nodes may be deleted or added based on an actual situation.

The sensing precision in this application may be understood as accuracy of sensing an obstacle. Higher sensing precision indicates a lower probability of false detection and missed detection of the obstacle.

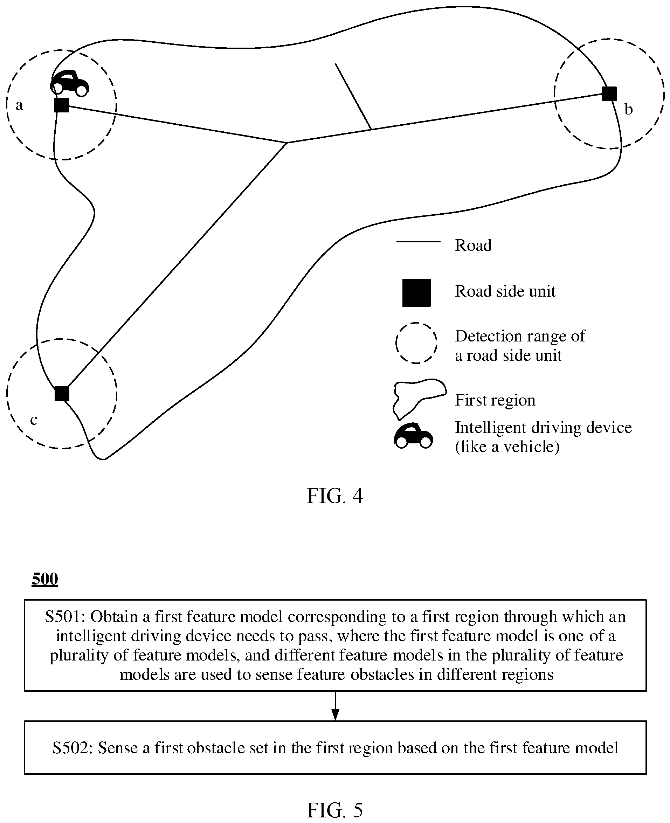

In the sensing system shown in FIG. 3, the road-end data processing center 200 may be disposed in the road side unit. As shown in FIG. 4, the road side unit may be disposed at an entrance of a region (for example, a first region) for which the road side unit is responsible, for example, at least one of entrances a, b, and c shown in FIG. 4. It should be understood that the road side unit communicates with the intelligent driving device within the detection range of the road side unit, and sends related information of the "region for which the road side unit is responsible" to the intelligent driving device, for example, the identification information of the region and/or information about recommended sensing precision.

FIG. 5 is a schematic flowchart of a sensing method 500 according to an embodiment of this application. The method 500 may be performed by the intelligent driving device 100 shown in FIG. 2, or may be performed by one or more processors of the computing platform 150 in FIG. 2, or may be performed by the vehicle-end data processing center 400 shown in FIG. 3. The following uses an example in which the method 500 is performed by the intelligent driving device for description. The method 500 may include steps S501 and S502.

S501: Obtain a first feature model corresponding to a first region through which the intelligent driving device needs to pass, where the first feature model is one of a plurality of feature models, and different feature models in the plurality of feature models are used to sense feature obstacles in different regions.

A "feature obstacle" in a region may be an obstacle that is specific to the region and that is different from that in another region, for example, a wild animal in a mountainous region, or a person wearing clothing with a regional feature. It should be understood that the first feature model corresponding to the first region is used to identify a feature obstacle in the first region.

For example, the first region may be obtained through division based on a geographical location, or may be obtained through division based on an administrative region, or may be obtained through division based on a geographical location and an administrative region. For example, the Qinling Nature Reserve (a geographical location) of Shaanxi Province (an administrative region) is obtained as the first region through division. Alternatively, the first region may be obtained through division on another basis.

For example, when the first feature model is obtained, the intelligent driving device may have traveled into the first region, or the intelligent driving device may have not traveled into the first region but has traveled into a detection range of a road side unit in the first region.

Optionally, the intelligent driving device may obtain the first feature model from information that is about the first feature model and that is received by the road side unit; or the intelligent driving device may obtain the first feature model based on information that is about the first feature model and that is received by the road side unit. In an example, when detecting the intelligent driving device, the road side unit sends the information about the first feature model to the intelligent driving device. In another example, when determining that the intelligent driving device travels to the first region, the intelligent driving device requests the first feature model from the road side unit, and the road side unit sends the information about the first feature model to the intelligent driving device in response to the request of the intelligent driving device.

In some possible implementations, if the intelligent driving device travels in the first region before, the intelligent driving device may store the first feature model corresponding to the first region. When determining that the intelligent driving device travels to the first region, the intelligent driving device finds the first feature model in historical information stored on the intelligent driving device.

For example, a manner in which the intelligent driving device determines that the intelligent driving device travels to the first region may include but is not limited to the following: determining, based on sensor information (for example, a GPS signal) obtained from a sensing system, that the intelligent driving device travels to the first region; and determining, based on identification information of the first region received from the road side unit in the first region, that the intelligent driving device travels to the first region. The identification information of the first region may be a region number, or may be other information that can be used to identify the first region.

S502: Sense a first obstacle set in the first region based on the first feature model.

For example, the intelligent driving device processes sensor data from the sensing system based on the first feature model, to sense the first obstacle set in the first region. It should be understood that the first obstacle set may include the feature obstacle in the first region.

Further, a travel path may be planned for the intelligent driving device based on the first obstacle set, to control traveling of the intelligent driving device.

Optionally, the intelligent driving device may further sense a second obstacle set in the first region based on a second feature model. The second feature model is a feature model of the intelligent driving device. The second feature model may be obtained through training based on sensor data obtained in a historical travel process of the intelligent driving device. An obstacle existing on a road on which the intelligent driving device frequently travels may be sensed based on the second feature model. It should be understood that the feature obstacle in the first region cannot be sensed or cannot be accurately sensed based on the second feature model.

Optionally, the travel path may be planned for the intelligent driving device based on the first obstacle set and the second obstacle set, to control traveling of the intelligent driving device. According to the sensing method provided in this embodiment of this application, when the intelligent driving device is about to travel or has traveled in the first region, the feature obstacle in the first region can be identified by obtaining the first feature model corresponding to the first region. This helps improve sensing precision of the intelligent driving device in the region. Further, when traveling to different regions, the intelligent driving device can sense different feature obstacles corresponding to different regions. Therefore, missed detection and false detection that are caused by an insufficient sensing capability of a sensing algorithm can be reduced, to improve driving safety.

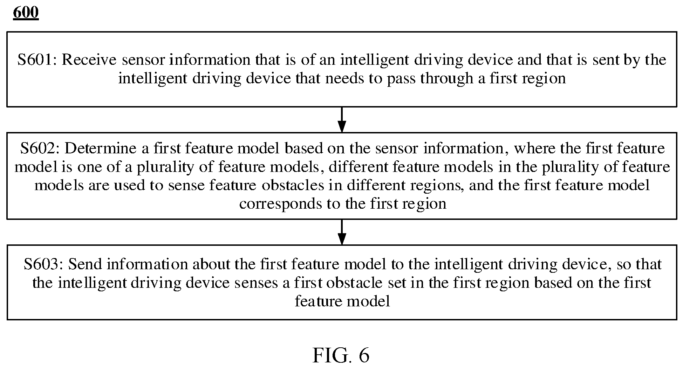

FIG. 6 is a schematic flowchart of a sensing method 600 according to an embodiment of this application. The method 600 may be performed by a road side unit that exchanges information with the intelligent driving device 100 shown in FIG. 2, or may be performed by a computing platform of the road side unit, or may be performed by the road-end data processing center 200 shown in FIG. 3. The following uses an example in which the method 600 is performed by the road side unit for description. The method 600 may include steps S601 to S603.

S601: Receive sensor information that is of an intelligent driving device and that is sent by the intelligent driving device that needs to pass through a first region.

For example, the first region may be the first region in the method 500. For a division method of the first region, refer to the descriptions in the method 500. Details are not described herein again.

For example, the sensor information may include information about a sensor type, for example, information indicating that a sensor is a radar or a camera apparatus. Alternatively, the sensor information may be other information that may indicate a sensor type. The intelligent driving device is used as an example. The sensor information may include a VIN number. In some possible implementations, the road side unit may determine, based on the VIN number, a type of a sensor used by the vehicle. It should be understood that formats of sensor data output by different types of sensors are different, and in a process of processing data of different sensors to obtain a sensing result (for example, an obstacle set), different feature models may be required.

S602: Determine a first feature model based on the sensor information, where the first feature model is one of a plurality of feature models, different feature models in the plurality of feature models are used to sense feature obstacles in different regions, and the first feature model corresponds to the first region.

For example, the first feature model may be the first feature model in the method 500.

S603: Send information about the first feature model to the intelligent driving device, so that the intelligent driving device senses a first obstacle set in the first region based on the first feature model.

In some possible implementations, the information about the first feature model may include the first feature model, or the information about the first feature model may be information that can be used to identify or obtain the first feature model.

According to the sensing method provided in this embodiment of this application, the first feature model corresponding to the first region is sent to the intelligent driving device that needs to pass through the first region, to help the intelligent driving device identify the feature obstacle in the first region based on the first feature model. This helps improve sensing precision of the intelligent driving device in the region, and can reduce missed detection and false detection that are caused by an insufficient sensing capability of a sensing algorithm, thereby improving driving safety.

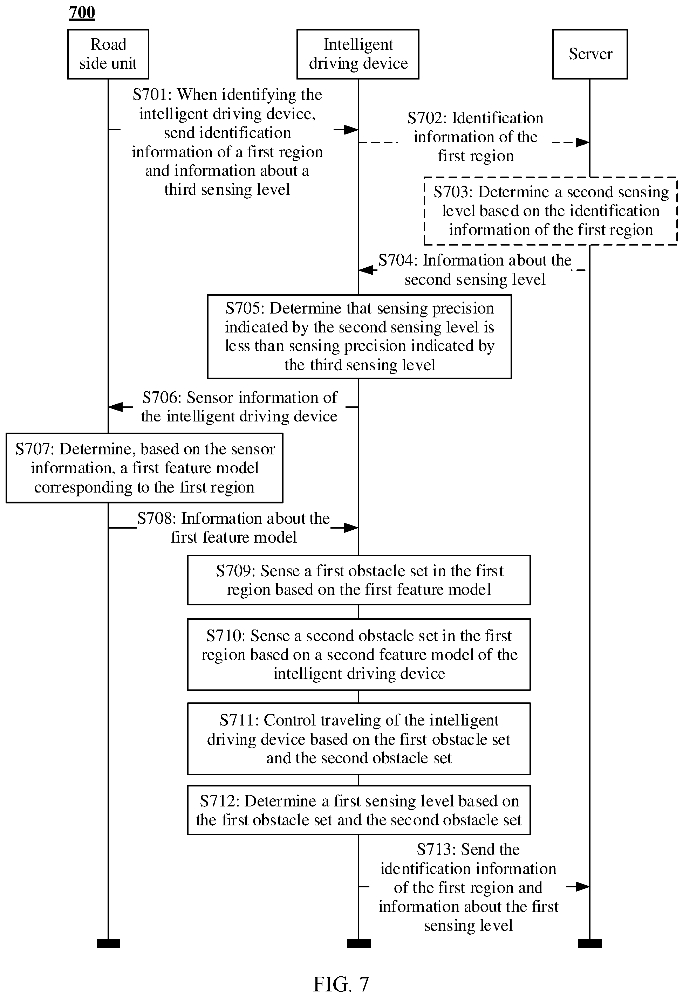

The foregoing separately describes, with reference to FIG. 5 and FIG. 6, method procedures of the sensing methods provided in embodiments of this application when the sensing methods are applied to the intelligent driving device and the road side unit. With reference to FIG. 7, the following describes, by using an example, a specific procedure in which an intelligent driving device senses an obstacle set based on the first feature model.

FIG. 7 is a schematic flowchart of a sensing method 700 according to an embodiment of this application. The method 700 is an extension of the method 500 and the method 600. For example, the method 700 may be performed in parallel with the method 500 and the method 600. For example, steps performed by a road side unit in the method 700 may be performed by the road-end data processing center 200 shown in FIG. 3, steps performed by the intelligent driving device in the method 700 may be performed by the vehicle-end data processing center 400 shown in FIG. 3, and steps performed by a server in the method 700 may be performed by the cloud server 300 shown in FIG. 3. It should be understood that steps or operations of the sensing method shown in FIG. 7 are merely examples. In embodiments of this application, other operations or variations of the operations in FIG. 7 may alternatively be performed. In addition, the steps in FIG. 7 may be performed in a sequence different from a sequence presented in FIG. 7, and it is possible that not all the operations in FIG. 7 need to be performed.

The method 700 may include the following steps.

S701: When identifying the intelligent driving device, the road side unit sends identification information of a first region and information about a third sensing level to the intelligent driving device.

For example, the identification information of the first region may be the identification information of the first region in the foregoing embodiment, for example, may be a region number, or may be other information that can be used to identify the first region.

Optionally, the road side unit may separately send the identification information of the first region and the information about the third sensing level to the intelligent driving device, where the third sensing level indicates recommended sensing precision. The recommended sensing precision may be recommended accuracy that is of sensing an obstacle in the region by the intelligent driving device, to ensure driving safety.

In some possible implementations, the road side unit is disposed at an entrance of the first region.

S702: The intelligent driving device sends the identification information of the first region to the server.

S703: The server determines a second sensing level based on the identification information of the first region.

The second sensing level indicates current sensing precision of the first region.

In some possible implementations, the second sensing level may be determined by the server based on information about a sensing level reported by the intelligent driving device that passes through the first region.

S704: The server sends information about the second sensing level to the intelligent driving device.

In some possible implementations, S703 may be skipped, and S704 is directly performed. To be specific, the server sends the information about the second sensing level to the intelligent driving device based on the identification information of the first region.

S705: The intelligent driving device determines that sensing precision indicated by the second sensing level is less than the sensing precision indicated by the third sensing level.

For example, the second sensing level may indicate the current sensing precision of the first region, or may indicate default sensing precision of the intelligent driving device. The default sensing precision may be set when the intelligent driving device is delivered from a factory, or may be set by a user of the intelligent driving device.

In some possible implementations, S702 to S704 may not be performed, and S705 is directly performed after S701 is performed. To be specific, if the intelligent driving device does not obtain, from the server, information indicating sensing precision of the first region, the intelligent driving device determines whether the default sensing precision of the intelligent driving device is less than the sensing precision indicated by the third sensing level.

It should be understood that, when the sensing precision indicated by the second sensing level is less than the sensing precision indicated by the third sensing level, S706 continues to be performed.

In some possible implementations, if the sensing precision indicated by the second sensing level is greater than or equal to the sensing precision indicated by the third sensing level, the intelligent driving device may sense a surrounding obstacle based on a feature model currently used by the intelligent driving device (for example, a feature model of the intelligent driving device, namely, a second feature model in the following), or the intelligent driving device determines, based on the sensing precision indicated by the second sensing level, a feature model used to sense an obstacle.

S706: The intelligent driving device sends sensor information of the intelligent driving device to the road side unit.

For example, the sensor information may be the sensor information in the method 600.

S707: The road side unit determines, based on the sensor information, a first feature model corresponding to the first region.

In some possible implementations, the road side unit further determines an executable file, a dependency, and the like that are associated with the first feature model, and sends the executable file, the dependency, and the like to the intelligent driving device along with the first feature model.

S708: The road side unit sends information about the first feature model to the intelligent driving device.

In some possible implementations, S707 may be skipped, and S708 is directly performed. To be specific, the road side unit sends the information about the first feature model to the intelligent driving device based on the sensor information.

S709: The intelligent driving device senses a first obstacle set in the first region based on the first feature model.

In some possible implementations, the intelligent driving device deploys the first feature model (for example, deploys the first feature model on the region sensing node 420 in FIG. 3), and processes sensor data from a sensing system based on the first feature model, to obtain the first obstacle set.

In some possible implementations, the recommended sensing precision indicated by the third sensing level in S701 may be further used to represent accuracy of sensing an obstacle based on the first feature model.

S710: The intelligent driving device senses a second obstacle set in the first region based on the second feature model of the intelligent driving device.

In some possible implementations, the default sensing precision of the intelligent driving device in S705 may be further used to represent accuracy of sensing an obstacle based on the second feature model.

In some possible implementations, S709 and S710 may alternatively be simultaneously performed.

S711: The intelligent driving device controls traveling of the intelligent driving device based on the first obstacle set and the second obstacle set.

For example, the Hungarian matching algorithm is used to match obstacles in the first obstacle set and the second obstacle set to obtain a new obstacle set, to plan a travel path of the intelligent driving device based on the new obstacle set.

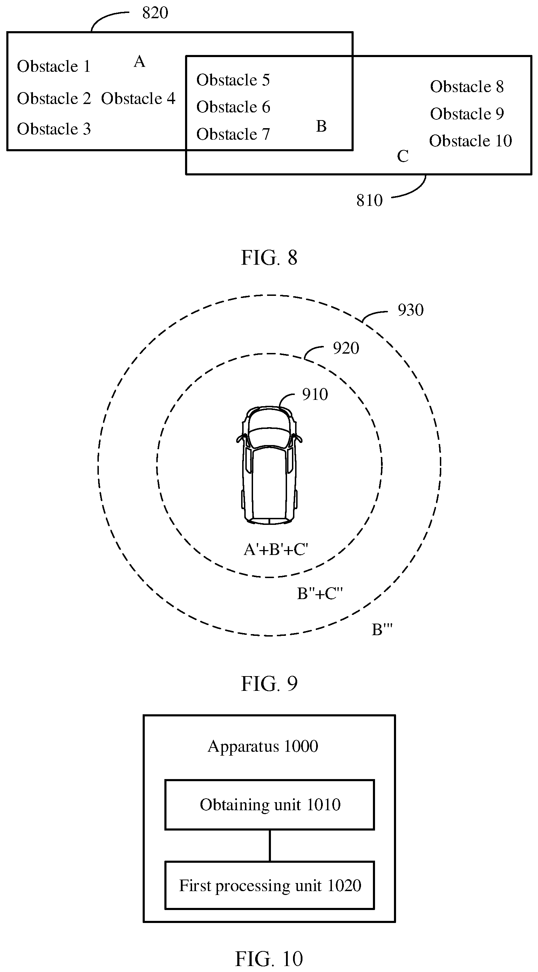

In some possible implementations, the new obstacle set obtained after matching is performed on the two obstacle sets may be shown in FIG. 8. A block 810 is the first obstacle set, including an obstacle 5 to an obstacle 10, and a block 820 is the second obstacle set, including an obstacle 1 to an obstacle 7. Obstacle sets A, B, and C are new obstacle sets obtained after matching is performed on the first obstacle set and the second obstacle set. Specifically, the obstacle set A may include the obstacle 1 to an obstacle 4, the obstacle set B may include the obstacle 5 to the obstacle 7, and the obstacle set C may include an obstacle 8 to the obstacle 10. It may be understood that the obstacle set B (or referred to as a third obstacle set) includes an obstacle included in both the first obstacle set and the second obstacle set. The obstacle set A is an obstacle set obtained by removing the obstacle in the obstacle set B from the second obstacle set. The obstacle set C is an obstacle set obtained by removing the obstacle in the obstacle set B from the first obstacle set.

Further, information about the obstacle sets A, B, and C is sent to a regulation and control module (for example, the regulation and control node 470), so that the regulation and control module plans a travel path of the intelligent driving device based on the obstacle information.

In some possible implementations, for different preset ranges of the intelligent driving device, different obstacle sets are used to plan a travel path of the intelligent driving device. For example, within a first preset range of the intelligent driving device, traveling of the intelligent driving device is controlled based on a union set of the first obstacle set and the second obstacle set; outside the first preset range and within a second preset range of the intelligent driving device, traveling of the intelligent driving device is controlled based on the first obstacle set; and outside the second preset range, traveling of the intelligent driving device is controlled based on the third obstacle set.

In embodiments of this application, "within" may mean that a number is included, and "outside" may mean that the number is not included. For example, within 30 meters of the intelligent driving device means that a range in which a distance from the intelligent driving device is less than or equal to 30 meters is included; and outside 30 meters of the intelligent driving device means that a range in which a distance from the intelligent driving device is greater than 30 meters is included.

For example, the intelligent driving device is a vehicle 910 in FIG. 9. Within a first preset range 920 of the vehicle 910, path planning may be performed based on obstacle sets A', B', and C'. A' is a set of obstacles that are within the first preset range 920 of the vehicle 910 and that are in the obstacle set A; B' is a set of obstacles that are within the first preset range 920 of the vehicle 910 and that are in the obstacle set B; and C' is a set of obstacles that are within the first preset range 920 of the vehicle 910 and that are in the obstacle set C. A union set of the obstacle sets A', B', and C' may also be understood as a set of obstacles that are within the first preset range 920 of the vehicle 910 and that are in the union set of the first obstacle set and the second obstacle set.

Outside the first preset range 920 of the vehicle 910 and within a second preset range 930 of the vehicle 910, path planning may be performed based on obstacle sets B" and C". B" is a set of obstacles that are outside the first preset range 920 of the vehicle 910 and within the second preset range 930 of the vehicle 910 and that are in the obstacle set B; and C" is a set of obstacles that are outside the first preset range 920 of the vehicle 910 and within the second preset range 930 of the vehicle 910 and that are in the obstacle set C. A union set of the obstacle sets B" and C" may also be understood as a set of obstacles that are outside the first preset range 920 of the vehicle 910 and within the second preset range 930 of the vehicle 910 and that are in the union set of the first obstacle set and the second obstacle set.

Outside the second preset range 930 of the vehicle 910, path planning may be performed based on an obstacle set B‴. B‴ is a set of obstacles that are outside the second preset range 930 of the vehicle 910 and that are in the obstacle set B. The obstacle set B‴ may also be understood as a set of obstacles that are outside the second preset range 930 of the vehicle 910 and that are in the third obstacle set.

For example, the first preset range (or the first preset range 920) may be a range of 30 meters away from the intelligent driving device (or the vehicle 910), and the second preset range (or the second preset range 930) may be a range of 60 meters away from the intelligent driving device (or the vehicle 910). It should be understood that setting of the preset range is merely an example for description. In a specific implementation process, another preset range may be used. For example, the preset range may be determined by using a closest in-path vehicle (closest in-path vehicle, CIPV) method. Values of the preset range may be different at different locations of the intelligent driving device.

S712: The intelligent driving device determines a first sensing level based on the first obstacle set and the second obstacle set.

It should be understood that the first sensing level indicates sensing precision of the intelligent driving device in a case in which the intelligent driving device passes through the first region. The sensing precision of the intelligent driving device in a case in which the intelligent driving device passes through the first region may also be understood as sensing precision of the intelligent driving device in the first region.

For example, the intelligent driving device determines the first sensing level based on the obstacle sets A, B, and C. Specifically, the intelligent driving device determines an accumulated matching quantity s, an accumulated region false-detection quantity fd, and an accumulated region missed-detection quantity lf. The accumulated matching quantity s is a total quantity of obstacles included in the obstacle set B determined once or more times, the accumulated region false-detection quantity fd is a total quantity of obstacles included in the obstacle set A determined once or more times, and the accumulated region missed-detection quantity lf is a total quantity of obstacles included in the obstacle set C determined once or more times. Further, a false detection rate a and an accuracy rate b are calculated according to the following formulas:

$$ a = \frac{fd}{lf+s} * 100\%, $$

and

$$ b = \frac{s}{lf + s} * 100\% $$

Further, the first sensing level is determined based on the false detection rate a and the accuracy rate b. For example, a relationship between the sensing level and each of the false detection rate and the accuracy rate may be shown in Table 1. It should be understood that a lower false detection rate and a higher accuracy rate indicate higher sensing precision indicated by the sensing level. As shown in Table 1, a higher value of a sensing level indicates higher sensing precision. To be specific, sensing precision indicated by a sensing level 1 is less than sensing precision indicated by a sensing level 2, and so on. For example, when the false detection rate a is less than or equal to a false detection rate threshold corresponding to the sensing level 1, the false detection rate a is greater than a false detection rate threshold corresponding to the sensing level 2, the accuracy rate b is greater than or equal to an accuracy rate threshold corresponding to the sensing level 1, and the accuracy rate b is less than an accuracy rate threshold corresponding to the sensing level 2, the first sensing level is determined as the sensing level 1. For example, a0 to a3 shown in Table 1 may be 30%, 20%, 10%, and 5% respectively, and b0 to b3 may be 80%, 85%, 90%, and 95% respectively, or a0 to a3 and b0 to b3 may be other values. In some possible implementations, the sensing level may be further determined based on duration c required for sensing an obstacle with reference to a sensing algorithm. For example, in a case in which the false detection rate a and the accuracy rate b respectively meet conditions corresponding to the sensing level 1, when duration required for sensing an obstacle by using a sensing algorithm is greater than or equal to duration threshold corresponding to the sensing level 1, and is less than duration threshold corresponding to the sensing level 2, the first sensing level is determined as the sensing level 1. For example, c0 to c3 shown in Table 1 may be 0.005 hours, 0.010 hours, 0.015 hours, and 0.020 hours respectively, or c0 to c3 may be other values.

Table 1 Correspondence between a sensing level and each of a false detection rate and an accuracy rate

| Sensing level | False detection rate threshold | Accuracy rate threshold | Duration threshold |
|---|---|---|---|
| 1 | a0 | b0 | c0 |
| 2 | a1 | b1 | c1 |
| 3 | a2 | b2 | c2 |
| 4 | a3 | b3 | c3 |

It should be understood that the relationship between the sensing level and each of the false detection rate and the accuracy rate shown in Table 1 is merely an example for description. In a specific implementation process, more or fewer sensing levels may be obtained through classification.

In some possible implementations, the intelligent driving device may store information about the first sensing level, and when the intelligent driving device travels to the first region next time, the intelligent driving device may determine, based on the first sensing level, a sensing algorithm required for obstacle identification.

S713: The intelligent driving device sends the identification information of the first region and the information about the first sensing level to the server.

It should be understood that the intelligent driving device sends the identification information of the first region and the information about the first sensing level to the server, so that the server updates a sensing level corresponding to the first region.

In some possible implementations, when the first sensing level is different from the second sensing level received in S704, the intelligent driving device sends the information about the first sensing level to the server.

In some possible implementations, S712 and S713 may not be performed.

According to the sensing method provided in this embodiment of this application, when the intelligent driving device is about to travel or has traveled in the first region, the first feature model corresponding to the first region may be obtained from the road side unit, and the feature obstacle in the first region can be identified based on the first feature model. This helps improve sensing precision of the intelligent driving device in the region. Further, when traveling to different regions, the intelligent driving device can sense different feature obstacles corresponding to different regions. Therefore, missed detection and false detection that are caused by an insufficient sensing capability of a sensing algorithm can be reduced, to improve driving safety. According to the sensing method provided in embodiments of this application, for different preset ranges of the intelligent driving device, different obstacle sets can be further used to plan a travel path of the intelligent driving device. This helps improve smoothness of a planning algorithm, reduce unnecessary computing power wastes, and reduce energy consumption. In addition, according to implementation of the sensing method provided in embodiments of this application, during road side unit deployment, the road side unit only needs to be deployed at an entrance of a region; there is no need to dispose a plurality of road side units so that a detection range of the road side unit covers an entire road; and there is no need to deploy a sensing-type road side unit so that costs required for deploying the road side unit can be greatly reduced. In addition, in embodiments of this application, the sensing level of the intelligent driving device in the first region can be further evaluated, so that the server updates the sensing level corresponding to the first region. This reduces safety accidents caused by misjudgment of the sensing level of the first region, and helps improve driving safety.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The foregoing describes in detail the methods provided in embodiments of this application with reference to FIG. 3 to FIG. 9. Apparatuses provided in embodiments of this application are described below in detail with reference to FIG. 10 to FIG. 12. It should be understood that descriptions of apparatus embodiments correspond to the descriptions of the method embodiments. Therefore, for content that is not described in detail, refer to the method embodiments. For brevity, details are not described herein again.

FIG. 10 is a block diagram of a sensing apparatus 1000 according to an embodiment of this application. The apparatus 1000 includes an obtaining unit 1010 and a first processing unit 1020.

The apparatus 1000 may include units configured to perform the method in FIG. 5 or FIG. 7. In addition, the units in the apparatus 1000 and the foregoing other operations and/or functions are separately used to implement corresponding procedures of the method embodiments in FIG. 5 or FIG. 7.

When the apparatus 1000 is configured to perform the method 500 in FIG. 5, the obtaining unit 1010 may be configured to perform S501 in the method 500, and the first processing unit 1020 may be configured to perform S502 in the method 500.

Specifically, the obtaining unit 1010 is configured to: obtain a first feature model corresponding to a first region through which an intelligent driving device needs to pass, where the first feature model is one of a plurality of feature models, and different feature models in the plurality of feature models are used to sense feature obstacles in different regions; and the first processing unit 1020 is configured to: sense a first obstacle set in the first region based on the first feature model.

Optionally, the apparatus 1000 further includes a second processing unit and a third processing unit. The second processing unit is configured to: sense a second obstacle set in the first region based on a second feature model of the intelligent driving device; and the third processing unit is configured to: control, within a first preset range of the intelligent driving device, traveling of the intelligent driving device based on a union set of the first obstacle set and the second obstacle set; control, outside the first preset range and within a second preset range of the intelligent driving device, traveling of the intelligent driving device based on the first obstacle set; and control, outside the second preset range, traveling of the intelligent driving device based on a third obstacle set, where the third obstacle set includes an obstacle included in both the first obstacle set and the second obstacle set.

Optionally, the apparatus further includes a fourth processing unit, and the fourth processing unit is configured to: determine a first sensing level based on the first obstacle set and the second obstacle set, where the first sensing level indicates sensing precision of the intelligent driving device in a case in which the intelligent driving device passes through the first region.

Optionally, the apparatus further includes a first communication unit, where the first communication unit is configured to: send identification information of the first region and information about the first sensing level to a server, so that the server updates a sensing level corresponding to the first region.

Optionally, the apparatus further includes a second communication unit. The obtaining unit 1010 is configured to: obtain information that is about the first feature model and that is sent by a road side unit in the first region and received by the second communication unit, where the road side unit is located at an entrance of the first region.

In some possible implementations, the first communication unit and the second communication unit may be a same communication unit, or may be different communication units. This is not specifically limited in this embodiment of this application.

Optionally, in some implementations of the third aspect, the second communication unit is further configured to: send sensor information of the intelligent driving device to the road side unit; and receive the information that is about the first feature model and that is sent by the road side unit based on the sensor information.

Optionally, in some implementations of the third aspect, the second communication unit is further configured to: receive information that is about a third sensing level and that is sent by the road side unit, where the third sensing level indicates recommended sensing precision corresponding to the first region; and send the sensor information of the intelligent driving device to the road side unit when sensing precision of the second sensing level is less than the sensing precision of the third sensing level, where the second sensing level indicates current sensing precision corresponding to the first region or default sensing precision of the intelligent driving device.

Optionally, when the second sensing level indicates the current sensing precision corresponding to the first region, the first communication unit is further configured to: send the identification information of the first region to the server; and receive information that is about the second sensing level and that is sent by the server based on the identification information.

For example, the obtaining unit 1010 may include the region sensing and scheduling node 410 shown in FIG. 3; the first processing unit 1020 may include the region sensing node 420 and the first fusion node 430 shown in FIG. 3; the second processing unit may include the sensing node 440 and the second fusion node 450 shown in FIG. 3; the third processing unit may include the region fusion node 460 shown in FIG. 3, or the third processing unit may include the region fusion node 460 and the regulation and control node 470 shown in FIG. 3; the fourth processing unit may include the region fusion node 460 shown in FIG. 3; and the first communication unit or the second communication unit may include the region sensing and scheduling node 410 shown in FIG. 3.

In some possible implementations, the obtaining unit 1010 and the first communication unit (and/or the second communication unit) may be a same unit, or the obtaining unit 1010 includes the first communication unit (and/or the second communication unit).

In a specific implementation process, the operations performed by the obtaining unit 1010 and the first processing unit 1020 may be performed by a same processor, or may be performed by different processors, for example, performed by a plurality of processors. In an example, one or more processors may be connected to one or more sensors in the sensing system 120 in FIG. 2, information such as a type and a location of an obstacle around the intelligent driving device is obtained from the one or more sensors, and the information is processed based on the first feature model and/or the second feature model to obtain an obstacle set (for example, the first obstacle set and/or the second obstacle set). Further, the one or more processors may further regulate and control a travel path of the intelligent driving device based on the obstacle set. For example, in a specific implementation process, the one or more processors may be processors disposed in an in-vehicle infotainment, or processors disposed in other vehicle-mounted terminals. In an example, in a specific implementation process, the apparatus 1000 may be a chip disposed in an in-vehicle infotainment or another vehicle-mounted terminal. In another example, in a specific implementation process, the apparatus 1000 may be the computing platform 150 that is disposed in the intelligent driving device and that is shown in FIG. 2.

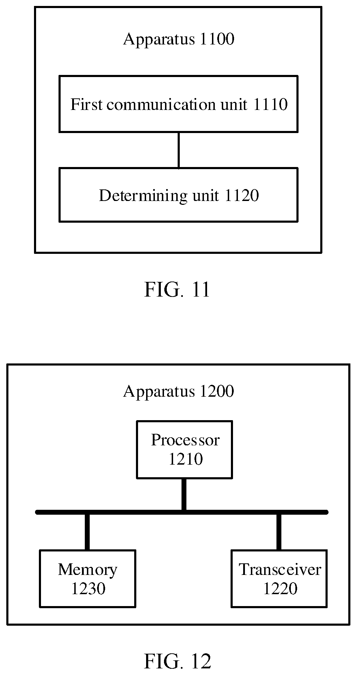

FIG. 11 is a block diagram of a sensing apparatus 1100 according to an embodiment of this application. The apparatus 1100 includes a first communication unit 1110 and a determining unit 1120.

The apparatus 1100 may include units configured to perform the method in FIG. 6 or FIG. 7. In addition, the units in the apparatus 1100 and the foregoing other operations and/or functions are separately used to implement corresponding procedures of the method embodiments in FIG. 6 or FIG. 7.

When the apparatus 1100 is configured to perform the method 600 in FIG. 6, the first communication unit 1110 may be configured to perform S601 and S603 in the method 600, and the determining unit 1120 may be configured to perform S602 in the method 600.

Specifically, the first communication unit 1110 is configured to: receive sensor information that is of an intelligent driving device and that is sent by the intelligent driving device that needs to pass through a first region; the determining unit 1120 is configured to: determine a first feature model based on the sensor information, where the first feature model is one of a plurality of feature models, different feature models in the plurality of feature models are used to sense feature obstacles in different regions, and the first feature model corresponds to the first region; and the first communication unit 1110 is further configured to: send information about the first feature model to the intelligent driving device, so that the intelligent driving device senses a first obstacle set in the first region based on the first feature model.

Optionally, the apparatus further includes a second communication unit, and the second communication unit is configured to: before the first communication unit 1110 receives the sensor information that is of the intelligent driving device and that is sent by the intelligent driving device, send information about a sensing level to the intelligent driving device, where the sensing level indicates recommended sensing precision corresponding to the first region.

In some possible implementations, the first communication unit and the second communication unit may be a same communication unit, or may be different communication units. This is not specifically limited in this embodiment of this application.

Optionally, the apparatus further includes a third communication unit, and the third communication unit is further configured to: send identification information of the first region to the intelligent driving device.

In some possible implementations, the third communication unit and the second communication unit may be a same communication unit; or the third communication unit and the first communication unit may be a same communication unit; or the first communication unit, the second communication unit, and the third communication unit may be a same communication unit, or may be different communication units.

For example, the first communication unit 1110 may include the deployment module 220 shown in FIG. 3, the determining unit 1120 may also include the deployment module 220 shown in FIG. 3, the second communication unit may include the broadcast module 210 shown in FIG. 3, and the third communication unit may include the broadcast module 210 shown in FIG. 3.

In a specific implementation process, the operations performed by the first communication unit 1110 and the determining unit 1120 may be performed by a same processor, or may be performed by different processors, for example, performed by a plurality of processors. In a specific implementation process, the one or more processors may be processors disposed in the road side unit, for example, processors disposed on a computing platform of the road side unit. In an example, in a specific implementation process, the apparatus 1100 may be a chip disposed in the road side unit. In another example, in a specific implementation process, the apparatus 1100 may be a computing platform disposed in the road side unit.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units.

All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the hardware circuit may be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

FIG. 12 is a block diagram of a sensing apparatus according to an embodiment of this application. The sensing apparatus 1200 shown in FIG. 12 may include a processor 1210, a transceiver 1220, and a memory 1230. The processor 1210, the transceiver 1220, and the memory 1230 are connected through an internal connection path. The memory 1230 is configured to store instructions. The processor 1210 is configured to execute the instructions stored in the memory 1230, so that the transceiver 1220 receives/sends some parameters. Optionally, the memory 1230 may be coupled to the processor 1210 through an interface, or may be integrated with the processor 1210.

It should be noted that the transceiver 1220 may include but is not limited to a transceiver apparatus of an input/output interface (input/output interface), to implement communication between the apparatus 1200 and another device or a communication network.

In some possible implementations, the apparatus 1200 may be disposed in the road-end data processing center 200 shown in FIG. 3, or disposed in the cloud server 300, or disposed in the vehicle-end data processing center 400.

In some possible implementations, the apparatus 1200 may be disposed in the intelligent driving device 100 shown in FIG. 2, and the processor 1210 may be a general-purpose CPU, a microprocessor, an ASIC, a GPU, or one or more integrated circuits, and is configured to execute a related program, to implement the sensing method in the method embodiments of this application. Alternatively, the processor 1210 may be an integrated circuit chip, and has a signal processing capability. In a specific implementation process, the steps of the sensing method in this application may be completed by using a hardware integrated logic circuit or instructions in a form of software in the processor 1210. The processor 1210 may alternatively be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, like a random access memory, a flash memory, a read-only memory, a programmable read-only memory, an electrically erasable programmable memory, or a register. The storage medium is located in the memory 1230, and the processor 1210 reads information in the memory 1230 and performs the sensing methods in the method embodiments of this application in combination with hardware of the processor 1210.

The memory 1230 may be a read only memory (read only memory, ROM), a static storage device, a dynamic storage device, or a random access memory (random access memory, RAM).

The transceiver 1220 uses a transceiver apparatus, for example, but not limited to a transceiver, to implement communication between the apparatus 1200 and another device or a communication network. For example, when the apparatus 1200 is disposed in the intelligent driving device, the information about the first feature model may be received by the transceiver 1220. When the apparatus 1200 is disposed in the road side unit, the information about the first feature model may be sent by the transceiver 1220. For another example, when the apparatus 1200 is disposed in the intelligent driving device, the identification information of the first region and the information about the first sensing level may be sent by the transceiver 1220. When the apparatus 1200 is disposed in the cloud server, the identification information of the first region and the information about the first sensing level may be received by the transceiver 1220.

An embodiment of this application further provides a sensing system. The sensing system includes the apparatus 1000 shown in FIG. 10 and the apparatus 1100 shown in FIG. 11. Alternatively, the sensing system includes the intelligent driving device and the road side unit.

Optionally, the sensing system may further include a server. The server is configured to: receive identification information that is of a first region and that is sent by an intelligent driving device that needs to pass through the first region; and send information about a second sensing level to the intelligent driving device based on the identification information, where the second sensing level indicates current sensing precision corresponding to the first region.

An embodiment of this application further provides a computer program product. The computer program product includes computer program code. When the computer program code is run on a computer, the computer is enabled to implement the methods in embodiments of this application.

An embodiment of this application further provides a computer-readable storage medium. The computer-readable storage medium stores computer instructions. When the computer instructions are run on a computer, the computer is enabled to implement the methods in embodiments of this application.

An embodiment of this application further provides a chip, including a circuit, configured to perform the methods in embodiments of this application.

In an implementation process, steps in the foregoing methods can be implemented by using a hardware integrated logical circuit in the processor, or by using instructions in a form of software. The methods disclosed with reference to embodiments of this application may be directly performed and completed by a hardware processor, or may be performed and completed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that, in embodiments of this application, the memory may include a read-only memory (read-only memory, ROM) and a random access memory (random access memory, RAM), and provide instructions and data for the processor.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "have", and their variants all mean "include but are not limited to", unless otherwise specifically emphasized in another manner.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing method, comprising:

   obtaining a first feature model corresponding to a first region through which an intelligent driving device needs to pass, wherein the first feature model is one of a plurality of feature models, and different feature models in the plurality of feature models are used to sense feature obstacles in different regions; and
   sensing a first obstacle set in the first region based on the first feature model.

2. The method according to claim 1, wherein the method further comprises:

   sensing a second obstacle set in the first region based on a second feature model of the intelligent driving device;
   controlling, within a first preset range of the intelligent driving device, traveling of the intelligent driving device based on a union set of the first obstacle set and the second obstacle set;
   controlling, outside the first preset range and within a second preset range of the intelligent driving device, traveling of the intelligent driving device based on the first obstacle set; and
   controlling, outside the second preset range, traveling of the intelligent driving device based on a third obstacle set, wherein the third obstacle set comprises an obstacle comprised in both the first obstacle set and the second obstacle set.

3. The method according to claim 2, wherein the method further comprises:
   determining a first sensing level based on the first obstacle set and the second obstacle set, wherein the first sensing level indicates sensing precision of the intelligent driving device in a case in which the intelligent driving device passes through the first region.

4. The method according to claim 3, wherein the method further comprises:
   sending identification information of the first region and information about the first sensing level to a server, so that the server updates a sensing level corresponding to the first region.

5. The method according to any one of claims 1 to 4, wherein the obtaining a first feature model corresponding to a first region in which an intelligent driving device is located comprises:
   receiving information that is about the first feature model and that is sent by a road side unit in the first region, wherein the road side unit is located at an entrance of the first region.

6. The method according to claim 5, wherein before the receiving information that is about the first feature model and that is sent by a road side unit in the first region, the method further comprises:

   sending sensor information of the intelligent driving device to the road side unit; and
   the receiving information that is about the first feature model and that is sent by a road side unit in the first region comprises:
   receiving the information that is about the first feature model and that is sent by the road side unit based on the sensor information.

7. The method according to claim 6, wherein the sending sensor information of the intelligent driving device to the road side unit comprises:

receiving information that is about a third sensing level and that is sent by the road side unit, wherein the third sensing level indicates recommended sensing precision corresponding to the first region; and

sending the sensor information of the intelligent driving device to the road side unit when sensing precision of a second sensing level is less than the sensing precision of the third sensing level, wherein the second sensing level indicates current sensing precision corresponding to the first region or default sensing precision of the intelligent driving device.

8. The method according to claim 7, wherein when the second sensing level indicates the current sensing precision corresponding to the first region, the method further comprises:

sending the identification information of the first region to the server; and
receiving information that is about the second sensing level and that is sent by the server based on the identification information.

9. A sensing method, comprising:

receiving sensor information that is of an intelligent driving device and that is sent by the intelligent driving device that needs to pass through a first region;

determining a first feature model based on the sensor information, wherein the first feature model is one of a plurality of feature models, different feature models in the plurality of feature models are used to sense feature obstacles in different regions, and the first feature model corresponds to the first region; and

sending information about the first feature model to the intelligent driving device, so that the intelligent driving device senses a first obstacle set in the first region based on the first feature model.

10. The method according to claim 9, wherein before the receiving sensor information that is of an intelligent driving device and that is sent by the intelligent driving device that needs to pass through a first region, the method further comprises: sending information about a sensing level to the intelligent driving device, wherein the sensing level indicates recommended sensing precision corresponding to the first region.

11. The method according to claim 9 or 10, wherein the method further comprises: sending identification information of the first region to the intelligent driving device.

12. A sensing apparatus, comprising an obtaining unit and a first processing unit, wherein the obtaining unit is configured to:

obtain a first feature model corresponding to a first region through which an intelligent driving device needs to pass, wherein the first feature model is one of a plurality of feature models, and different feature models in the plurality of feature models are used to sense feature obstacles in different regions; and
the first processing unit is configured to:
sense a first obstacle set in the first region based on the first feature model.

13. The apparatus according to claim 12, wherein the apparatus further comprises a second processing unit and a third processing unit, wherein
the second processing unit is configured to:

sense a second obstacle set in the first region based on a second feature model of the intelligent driving device; and
the third processing unit is configured to:

control, within a first preset range of the intelligent driving device, traveling of the intelligent driving device based on a union set of the first obstacle set and the second obstacle set;
control, outside the first preset range and within a second preset range of the intelligent driving device, traveling of the intelligent driving device based on the first obstacle set; and
control, outside the second preset range, traveling of the intelligent driving device based on a third obstacle set, wherein the third obstacle set comprises an obstacle comprised in both the first obstacle set and the second obstacle set.

14. The apparatus according to claim 13, wherein the apparatus further comprises a fourth processing unit, and the fourth processing unit is configured to:
determine a first sensing level based on the first obstacle set and the second obstacle set, wherein the first sensing level indicates sensing precision of the intelligent driving device in a case in which the intelligent driving device passes through the first region.

15. The apparatus according to claim 14, wherein the apparatus further comprises a first communication unit, and the first communication unit is configured to:
send identification information of the first region and information about the first sensing level to a server, so that the server updates a sensing level corresponding to the first region.

16. The apparatus according to any one of claims 12 to 15, wherein the apparatus further comprises a second communication unit, and the obtaining unit is configured to:
obtain information that is about the first feature model and that is sent by a road side unit in the first region and received by the second communication unit, wherein the road side unit is located at an entrance of the first region.

17. The apparatus according to claim 16, wherein the second communication unit is further configured to:

send sensor information of the intelligent driving device to the road side unit; and
receive the information that is about the first feature model and that is sent by the road side unit based on the sensor information.

18. The apparatus according to claim 17, wherein the second communication unit is configured to:

receive information that is about a third sensing level and that is sent by the road side unit, wherein the third sensing level indicates recommended sensing precision corresponding to the first region; and
send the sensor information of the intelligent driving device to the road side unit when sensing precision of a second sensing level is less than the sensing precision of the third sensing level, wherein the second sensing level indicates current sensing precision corresponding to the first region or default sensing precision of the intelligent driving device.

19. The apparatus according to claim 18, wherein when the second sensing level indicates the current sensing precision corresponding to the first region, the first communication unit is further configured to:

send the identification information of the first region to the server; and
receive information that is about the second sensing level and that is sent by the server based on the identification information.

20. A sensing apparatus, comprising a first communication unit and a determining unit, wherein
the first communication unit is configured to:

receive sensor information that is of an intelligent driving device and that is sent by the intelligent driving device that needs to pass through a first region;
the determining unit is configured to:

determine a first feature model based on the sensor information, wherein the first feature model is one of a plurality of feature models, different feature models in the plurality of feature models are used to sense feature obstacles in different regions, and the first feature model corresponds to the first region; and
the first communication unit is further configured to:
send information about the first feature model to the intelligent driving device, so that the intelligent driving device senses a first obstacle set in the first region based on the first feature model.

21. The apparatus according to claim 20, wherein the apparatus further comprises a second communication unit, and the second communication unit is configured to:
before the first communication unit receives the sensor information that is of the intelligent driving device and that is sent by the intelligent driving device, send information about a sensing level to the intelligent driving device, wherein the sensing level indicates recommended sensing precision corresponding to the first region.

22. The apparatus according to claim 20 or 21, wherein the apparatus further comprises a third communication unit, and the third communication unit is configured to:
send identification information of the first region to the intelligent driving device.

23. A sensing apparatus, comprising:

a memory, configured to store a computer program; and
a processor, configured to execute the computer program stored in the memory, so that the apparatus is enabled to perform the method according to any one of claims 1 to 8.

24. A sensing apparatus, comprising:

a memory, configured to store a computer program; and
a processor, configured to execute the computer program stored in the memory, so that the apparatus is enabled to perform the method according to any one of claims 9 to 11.

25. An intelligent driving device, comprising the apparatus according to any one of claims 12 to 19, and 23.

26. A road side unit, comprising the apparatus according to any one of claims 20 to 22, and 24.

27. A sensing system, comprising the intelligent driving device according to claim 25 and the road side unit according to claim 26.

28. The system according to claim 27, wherein the system further comprises a server, and the server is configured to:
receive identification information that is of a first region and that is sent by the intelligent driving device that needs to pass through the first region; and
send information about a second sensing level to the intelligent driving device based on the identification information, wherein the second sensing level indicates current sensing precision corresponding to the first region.

29. A chip, comprising a circuit, wherein the circuit is configured to perform the method according to any one of claims 1 to 11.

Road

Road side unit

Detection range of
a road side unit

Intelligent driving device
(like a vehicle)

FIG. 1

Intelligent driving device 100

Sensing system 120

Computing platform 150

Processor 151    Processor 152    ...    Processor 15n

FIG. 2

Control signal

Regulation and
control node
470

Vehicle-end data processing center 400

Sensor data

Sensing node 440

Region fusion node 460

Sending management
module 463

Receiving
management
module
461

Second fusion node
450

Fusion evaluation
module 462

First fusion
node 430

Region
sensing
node 420

Region sensing and
scheduling node 410

Road-end data
processing
center 200

Deployment
module 220

Broadcast
module 210

Cloud server 300

Transceiver
module 310

Query module
320

FIG. 3

EP 4 583 074 A1

Road

■ Road side unit

Detection range of
a road side unit

First region

Intelligent driving device
(like a vehicle)

FIG. 4

**500**

S501: Obtain a first feature model corresponding to a first region through which an intelligent driving device needs to pass, where the first feature model is one of a plurality of feature models, and different feature models in the plurality of feature models are used to sense feature obstacles in different regions

S502: Sense a first obstacle set in the first region based on the first feature model

FIG. 5

600

S601: Receive sensor information that is of an intelligent driving device and that is sent by the intelligent driving device that needs to pass through a first region

S602: Determine a first feature model based on the sensor information, where the first feature model is one of a plurality of feature models, different feature models in the plurality of feature models are used to sense feature obstacles in different regions, and the first feature model corresponds to the first region

S603: Send information about the first feature model to the intelligent driving device, so that the intelligent driving device senses a first obstacle set in the first region based on the first feature model

FIG. 6

<u>700</u>

| Road side unit | Intelligent driving device | Server |

S701: When identifying the intelligent driving device, send identification information of a first region and information about a third sensing level

S702: Identification information of the first region

S703: Determine a second sensing level based on the identification information of the first region

S704: Information about the second sensing level

S705: Determine that sensing precision indicated by the second sensing level is less than sensing precision indicated by the third sensing level

S706: Sensor information of the intelligent driving device

S707: Determine, based on the sensor information, a first feature model corresponding to the first region

S708: Information about the first feature model

S709: Sense a first obstacle set in the first region based on the first feature model

S710: Sense a second obstacle set in the first region based on a second feature model of the intelligent driving device

S711: Control traveling of the intelligent driving device based on the first obstacle set and the second obstacle set

S712: Determine a first sensing level based on the first obstacle set and the second obstacle set

S713: Send the identification information of the first region and information about the first sensing level

FIG. 7

| Obstacle 1 A | | |
|---|---|---|
| Obstacle 2 Obstacle 4 | Obstacle 5 | |
| Obstacle 3 | Obstacle 6 | Obstacle 8 |
| | Obstacle 7 B | Obstacle 9 |
| | | Obstacle 10 |

820

810

C

**FIG. 8**

A'+B'+C'

B"+C"

B'''

910

920

930

**FIG. 9**

Apparatus 1000

Obtaining unit 1010

First processing unit 1020

**FIG. 10**

Apparatus 1100

First communication unit 1110

Determining unit 1120

FIG. 11

Apparatus 1200

Processor 1210

Memory 1230

Transceiver 1220

FIG. 12

## INTERNATIONAL SEARCH REPORT

| International application No. |
|---|
| **PCT/CN2022/116830** |

| A. | CLASSIFICATION OF SUBJECT MATTER |
|---|---|

G08G1/09(2006.01)i;B60W30/08(2012.01)i;B60W30/095(2012.01)i;G08G1/16(2006.01)i

According to International Patent Classification (IPC) or to both national classification and IPC

| B. | FIELDS SEARCHED |
|---|---|

Minimum documentation searched (classification system followed by classification symbols)

IPC： G08G B60W

Documentation searched other than minimum documentation to the extent that such documents are included in the fields searched

Electronic data base consulted during the international search (name of data base and, where practicable, search terms used)

CNABS; CNTXT; CNKI; WPABS; CJFD; VEN; USTXT; WOTXT; EPTXT: 车, 路侧, 传感, 感知, 障碍, 范围, 区域, 等级, 精度, 调整, 更新, 驾驶, 环境, car, vehicle, roadside, sensor, obstacle, region, area, range, grade, precision, adjust, update, driving, environment

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113848921 A (CHINA FAW CO., LTD.) 28 December 2021 (2021-12-28) description, paragraphs [0023]-[0082] | 1, 2, 5, 6, 9, 11-13, 16, 17, 20, 22-27, 29 |
| X | CN 114332818 A (APOLLO ZHILIAN (BEIJING) TECHNOLOGY CO., LTD.) 12 April 2022 (2022-04-12) description, paragraphs [0042]-[0105], and figures 1-14 | 1, 9, 12, 20, 23-27, 29 |
| X | CN 112712719 A (BEIJING BAIDU NETCOM SCIENCE AND TECHNOLOGY CO., LTD.) 27 April 2021 (2021-04-27) description, paragraphs [0042]-[0091], and figures 1-8 | 1, 9, 12, 20, 23-27, 29 |
| Y | CN 113848921 A (CHINA FAW CO., LTD.) 28 December 2021 (2021-12-28) description, paragraphs [0023]-[0082] | 3, 4, 7, 8, 10, 14, 15, 18, 19, 21, 28 |
| Y | CN 114578344 A (CHANGSHA XINGSHEN INTELLIGENT TECHNOLOGY CO., LTD.) 03 June 2022 (2022-06-03) description, paragraphs [0045]-[0077] | 3, 4, 7, 8, 10, 14, 15, 18, 19, 21, 28 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 April 2023** | **27 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/116830** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 112590778 A (HUAWEI TECHNOLOGIES CO., LTD.) 02 April 2021 (2021-04-02) description, paragraphs [0055]-[0224], and figures 1-16 | 1-29 |

Form PCT/ISA/210 (second sheet) (July 2022)

## INTERNATIONAL SEARCH REPORT
### Information on patent family members

International application No.

**PCT/CN2022/116830**

| Patent document cited in search report | | | Publication date (day/month/year) | Patent family member(s) | | | Publication date (day/month/year) |
|---|---|---|---|---|---|---|---|
| CN | 113848921 | A | 28 December 2021 | None | | | |
| CN | 114332818 | A | 12 April 2022 | None | | | |
| CN | 112712719 | A | 27 April 2021 | CN | 112712719 | B | 03 May 2022 |
| | | | | US | 2022044564 | A1 | 10 February 2022 |
| | | | | KR | 20210138525 | A | 19 November 2021 |
| | | | | EP | 3955230 | A2 | 16 February 2022 |
| | | | | JP | 2022043217 | A | 15 March 2022 |
| | | | | EP | 3955230 | A3 | 15 March 2022 |
| CN | 114578344 | A | 03 June 2022 | None | | | |
| CN | 112590778 | A | 02 April 2021 | CN | 112590778 | B | 10 May 2022 |
| | | | | CN | 114834443 | A | 02 August 2022 |
| | | | | WO | 2021051959 | A1 | 25 March 2021 |
| | | | | US | 2022203971 | A1 | 30 June 2022 |
| | | | | EP | 4043309 | A1 | 30 June 2022 |

Form PCT/ISA/210 (patent family annex) (July 2022)